# EUROPEAN PATENT SPECIFICATION

(11) **EP 3 361 696 B1**
(45) Date of publication and mention of the grant of the patent: **05.02.2020**
(21) Application number: 17207711.7
(22) Date of filing: 15.12.2017
(51) Int. Cl.: H04L 29/06, H04L 9/08, H04L 9/14, H04L 9/32, H04L 9/06

(54) **A METHOD FOR SECURELY EXCHANGING LINK DISCOVERY INFORMATION**
METHODE ZUM SICHEREN AUSTAUSCH VON LINK DISCOVERY INFORMATIONEN
PROCÉDÉ D'ÉCHANGE SÉCURISÉ D'INFORMATIONS DE DÉCOUVERTE DE LIAISON

(30) Priority: 14.02.2017 US 201762458766 P; 21.07.2017 US 201715656590
(43) Date of publication of application: 15.08.2018
(73) Proprietor: Quanta Computer Inc., Taoyuan City 333 (TW)
(72) Inventor: Li, Cheng-Hsun, 333 Taoyuan City (TW); Shih, Ching-Chih, 333 Taoyuan City (TW)
(74) Representative: Michalski Hüttermann & Partner Patentanwälte mbB

(56) References cited:
- CN-A- 103 560 998
- US-A1- 2016 248 808
- Panagiotis Papadimitratos ET AL: "Secure Routing for Mobile Ad hoc Networks", SCS Communication Networks and Distributed Systems Modeling and Simulation Conference (CNDS 2002), 27 January 2002 (2002-01-27), pages 1-12, XP055447319, San Antonio, TX Retrieved from the Internet: URL:https://www.researchgate.net/profile/P anos_Papadimitratos/publication/2589156_Se cure_Rotuing_for_Mobile_Ad_Hoc_Networks/li nks/00b7d51780ad191e47000000.pdf [retrieved on 2018-02-02]

## Description

### CROSS-REFERENCE TO RELATED APPLICATIONS

This application claims priority to and the benefit of U.S. Provisional Application No. 62/458,766, filed February 14, 2017.

### FIELD OF THE INVENTION

The present invention relates generally to the field of data security and more particularly to providing data security to network elements, specifically co-ordinate nodes are provided in a network topology to exchange neighbor information and prevent spoofing packets from disturbing the network topology generation.

### BACKGROUND

In a deployed network topology, such as in data center, each node may want to discover its neighbor's information. Generally, as more information is exchanged more applications can be developed based on the exchanged information. Well-known protocols which are designed for such purpose include, for example, Link Layer Discovery Protocol (LLDP) and Cisco Discovery Protocol (CDP). LLDP is a well-known neighbor discovery protocol, which allows Ethernet network devices to advertise topology information such as device configuration and identification details to neighboring devices. For example, an Ethernet blade switch can advertise the presence of its ports, major capabilities, and a current status to other LLDP stations in the same LAN. LLDP transmissions occur on ports at regular intervals or whenever there is a relevant change to their status. The switch can also receive LLDP information advertised from adjacent LLDP-capable network devices. The information is exchanged via a plurality of type-length-values (TLVs) provided in an LLDP packet during transmission. Similar to the LLDP, the Cisco Work system employs the CDP to automatically discover network devices. CDP is a media-independent device discovery protocol which can be used by an operator to view information about other network devices directly attached to a particular network device.

Although offered as an example, these protocols are multicast to a group of supported network nodes. Many applications rely on these discovery protocols to develop their own applications. An issue arises when multicasting these kinds of packets. Due to lack of security in authenticating the neighbor nodes, anyone can deceive the receiver node by sending the same kind of packet content and format to disturb receivers, so that the developed applications can no longer function normally. This may include for example, when a customer's operating system is hacked, or where malicious users intentionally want to spoof the network infrastructure. There exists a need for the network nodes to verify and identify which packet is valid and which is invalid.

In P. G. Argyroudis and D. O'Mahony, "Secure routing for mobile ad hoc networks," in IEEE Communications Surveys & Tutorials, vol. 7, no. 3, pp. 2-21, Third Quarter 2005, doi: 10.1109/COMST.2005.1610547 it is described that routing in mobile ad hoc networks faces additional problems and challenges when compared to routing in traditional wired networks with fixed infrastructure. There are several well-known protocols that have been specifically developed to cope with the limitations imposed by ad hoc networking environments. The problem of routing in such environments is aggravated by limiting factors such as rapidly changing topologies, high power consumption, low bandwidth, and high error rates. Most of the existing routing protocols follow two different design approaches to confront the inherent characteristics of ad hoc networks: the table-driven and the source-initiated on-demand approaches.

Systems and methods for inhibiting attacks with a network are described in US 2016/248808 A1. In some examples described in this document, methods for inhibiting attacks by forwarding packets through a plurality of intermediate nodes when being transmitted from a source node to a destination node are provided, the methods comprising: receiving a packet at one of the plurality of intermediate nodes; determining at the selected intermediate node whether the packet has been sent to the correct one of the plurality of intermediate nodes based on a pseudo random function; and forwarding the packet to the destination node, based on the determining. In some embodiments an intermediate node is selected based on a pseudo random function. In some examples, systems and methods for establishing access to a multi-path network are described.

CN 103 560 998 A describes a method and a system for a wireless sensor network to resist DoS attacks and belongs to the technical field of wireless sensor networks. The method for the wireless sensor network to resist DoS attacks relates to a wireless sensor module, a second-level security guard mechanism and a low power consumption method for resisting DoS attacks. Through a security rousing mechanism and an encryption authentication algorithm, a sensor node is authenticated or encrypted and decrypted in a non-sleep state, and thus the DoS attacks can be resisted effectively under low power consumption conditions, and energy consumption of the remaining part of the wireless sensor network is prevented from being affected. Therefore, except for the energy consumption necessary to receive and transmit data information, the energy consumption can be reduced to the maximum while the DoS attacks can be resisted.

### SUMMARY

The invention is described in the independent claims. Preferred embodiments of the inventions may be found in the sub claims. Embodiments of the invention concern an apparatus, a network system and a method for providing data security to network elements. A network system according to the various embodiments can include a plurality of processing nodes. In some exemplary embodiments, the network system can include an authority node. Each processing node can include a processing node manager. Furthermore, one of the processing nodes in the plurality of processing nodes can be designated as a control node. In some embodiments, a processing node in the plurality of processing nodes is selected to receive a key via a secured connection. The key includes an instruction to forward advertised discovery packets to each of the processing nodes. In some embodiments of the disclosure, the selected processing node receives the key from the control node. In alternative embodiments, the selected processing node can receive the key from an authority node. In some embodiments, the selected processing node is configured to send the advertised discovery packets advertising network port information to each of the processing nodes. In response, the selected processing node can be configured to receive advertised discovery packets from the plurality of nodes. In some embodiments, the advertised discovery packets can include an authentication code. The selected processing node can be configured to examine the received advertised discovery packets to verify the authentication code received is in compliance with the received key.

In some embodiments, the selected processing node can be configured to examine the received advertised discovery packets to verify if the authentication code received is in compliance with the received key by verifying the same key is received. In an alternative embodiment, a 'message authentication code(MAC)' technique can be implemented to verify that the authentication code received is in compliance with the received key. Alternatively, in some embodiments of the dislcosure additional encrypt/decrypt keys to encrypt message & MAC can be employed to verify if the authentication code received is in compliance with the received key. In some exemplary embodiments, encryption and decryption can use well-known methods, such as for example, RSA, Tripple DES, AES, etc.

In some embodiments, the advertised discovery packets include the key and application-specific information maintained in the processing node. In some embodiments, the control node can be configured to select at least one processing node from the plurality of processing nodes. In some embodiments, the control node is configured to generate and distribute a key to the selected processing node, where the key includes an instruction to the selected processing node to forward advertised discovery packets to each of the non-selected processing nodes. Alternatively, an authority node can be configured to select at least one processing node from the plurality of processing nodes. Moreover, in some embodiments, the authority node is configured to generate and distribute a key to the selected processing node, where the key includes an instruction to the selected processing node to forward advertised discovery packets to each of the non-selected processing nodes. In some embodiments, the control node is selected from the plurality of processing nodes by an authority node. Wherein, a control node is assigned by an authority node so that all nodes are coordinated by this control node (pod-manager). In some embodiments, the control nodes are determined by locality.

### BRIEF DESCRIPTION OF THE DRAWINGS

Figure 1 is a block diagram of a distributed network system in accordance with embodiments of the disclosure as discussed herein;
Figure 2 is a block diagram of the distributed network system 100 of Figure 1 in which the components of Figure 1 are illustrated in more detail;
Figure 3 is a block diagram of the distributed network system 300 exemplifying the processing nodes 110n in accordance with embodiments of the disclosure;
Figure 4 is a flow diagram exemplifying the process of the processing node for providing data security to network elements in accordance to an embodiment of the disclosure;
Figure 5 is a flow diagram exemplifying the process of the authority node for providing data security to network elements in accordance to an embodiment of the disclosure; and
Figure 6 illustrates a block diagram of an example computer system for implementing the various embodiments of the invention.
Figure 7 illustrates an alternative embodiment in which a message authentication code technique is implemented to verify that the authentication code received is in compliance with the received key.

### DETAILED DESCRIPTION

The present invention is described with reference to the attached figures, wherein like reference numerals are used throughout the figures to designate similar or equivalent elements. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operations are not shown in detail to avoid obscuring the invention. The present invention is not limited by the illustrated ordering of acts or events, as some acts may occur in different orders and/or concurrently with other acts or events. Furthermore, not all illustrated acts or events are required to implement a methodology in accordance with the present invention.

In order to resolve the issue of the need for the network nodes to verify and identify which packet is valid and which is invalid, preferred embodiments of the present invention provide co-ordinate nodes in a network topology to exchange neighbor information and prevent spoofing packets from disturbing the network topology generation.

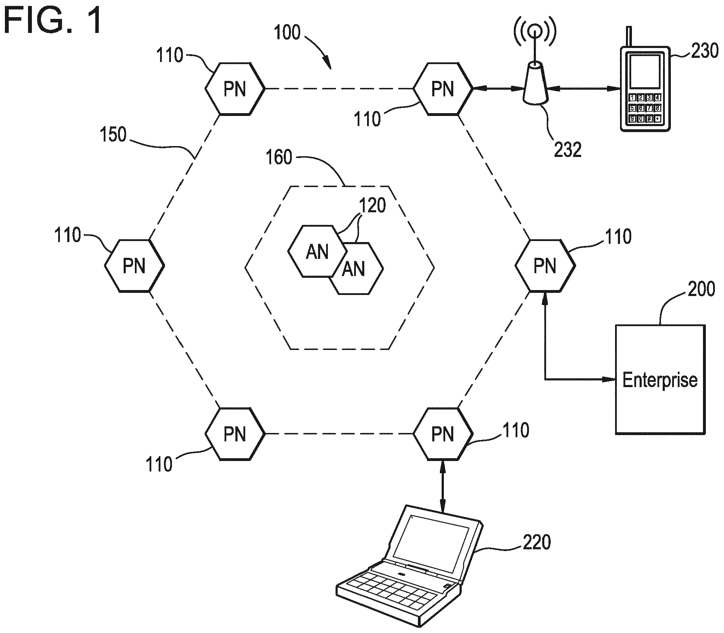

Figure 1 is a block diagram of a distributed network system 100. The system 100 can, for example, be implemented as an overlay network in a wide area network (WAN), such as the Internet. The distributed network system 100 includes content processing nodes 110 that provide data security to network elements. Specifically, the content processing nodes are provided in a network topology to exchange neighbor information and prevent spoofing packets from disturbing the network topology generation, for e.g., malware, spyware, and other undesirable content sent from or requested by an external system. Example external systems can include an enterprise 200, a computer device 220, and a mobile device 230, or other network and computing systems.

Each processing node 110 can be implemented by a plurality of computer and communication devices, e.g., server computers, gateways, switches, etc. In some implementations, the processing nodes 110 can serve as an access layer 150. The access layer 150 can, for example, provide external system access to the distributed network system 100. In some implementations, each processing node 110 can include Internet gateways and a plurality of server computers.

A mobile device 230 may be configured to communicate with a nearby processing node 110 through any available wireless access device, such as an access point, or a cellular gateway 232. A single computer device 220, such as a consumer's personal computer, may have its browser and e-mail program configured to access the nearest processing node 110, which, in turn, serves as a proxy for the computer device 220. Alternatively, an Internet provider may have all of its customer traffic processed through processing nodes 110.

In some implementations, the processing nodes 110 can communicate with one or more authority nodes 120. The authority nodes 120 can store policy data for each processing nodes 110 and can distribute the policy data to each processing node 110. The policy data can, for example, define security policies for a protected system, e.g., security policies for the enterprise 200. Example policy data can define access privileges for users, web sites and/or content that is disallowed, restricted domains, etc. Furthermore, the policy data can include short time authorization keys distributed to each processing node 110 to verify and authenticate neighboring processing nodes 110. The authority nodes 120 can distribute the policy data to the processing nodes 110. In some implementations, each processing node 110 can function as a control node. That is, each processing node can be selected by a user at the external devices, or at an authority node 120, to be designated as a control node to forward policy data to the processing nodes 110. In some embodiments, the control nodes are determined by locality.

In some implementations, each authority node 120 can be implemented by a plurality of computer and communication devices, e.g., server computers, gateways, switches, etc. In some implementations, the authority nodes 120 can serve as an application layer 160. The application layer 160 can, for example, manage and provide policy data for the processing nodes 110. Other application layer functions can also be provided in the application layer, such as providing and defining security policies, e.g., generating and distributing a short time key to a processing node. In alternative embodiments, the access layer 150 can, for example, manage and provide policy data for the processing nodes 110. Other application layer functions can also be provided in the access layer 150, such as providing and defining security policies, e.g., generating and distributing a short time key to a processing node.

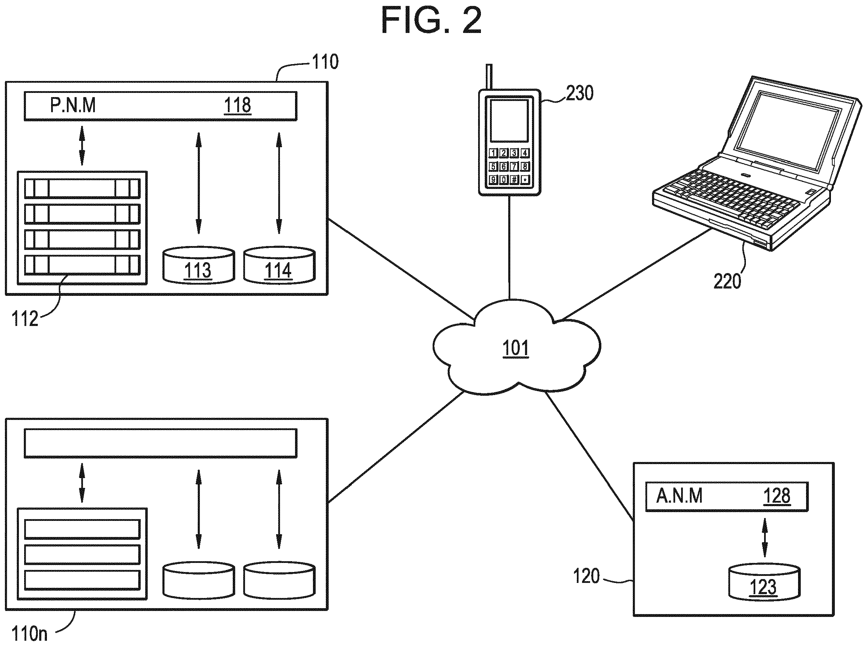

Figure 2 is a block diagram of the distributed network system 100 of Figure 1 in which the components of Figure 1 are illustrated in more detail. The distributed network system includes a component processing node 110, processing nodes 110n, an authority node 120, a computer device 220, a mobile device 230, connected via an overlay network in a wide area network (WAN), such as the Internet 101. Although only one representative authority node 120 is illustrated, there can be many of each of the component nodes 110 and 120 present in the distributed network system 100. Furthermore, in an alternative embodiment, a processing node 110, operating as a control node can be presented performing the tasks of the authority node 120.

A processing node 110 can include a processing node manager 118, a policy data database 113, a detection process filter 112, and a network port information database 114. In some embodiments, the processing node manager 118 can manage each content item in accordance within the policy data database 113, a detection process filter 112, and a network port information database 114, such that security policies for a plurality of processing nodes 110n in data communication with the processing node 110 are implemented. In some embodiments, the processing node manager 118 can send policy data to the authority node 120. It should be understood that a control node can be configured identical to the processing node 110.

An authority node 120 can include an authority node manager 128, a master security policy data database 123 for each of the processing nodes 110. An authority node manager 128 can be used to manage the master security policy data 123, e.g., receive input from each of the processing nodes 110n defining different security policies, and distribute the security policy to each of the processing nodes 110. The processing nodes 110 then store a local copy of the security policy.

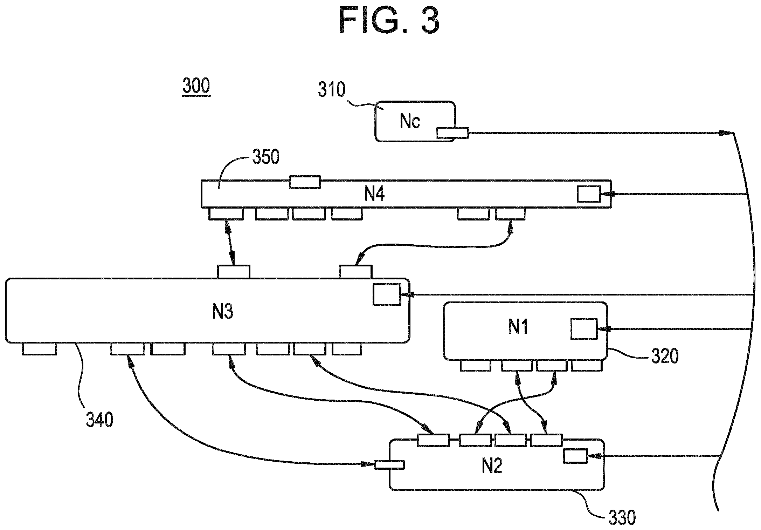

In some embodiments, the authority node manager 128 can select at least one processing node 110 from the plurality of processing nodes 110n. Furthermore, the authority node manager 128 can be configured to generate and distribute a security policy to a selected processing node 110. In some embodiments, the security policy can include a short time key that can include an instruction to direct the selected processing node 110 to forward advertised discovery packets to each of the remaining processing nodes 110n. This is discussed in depth with respect to Figure 3.

The processing node manager 118 is configured to receive the short time key from the authority node manager 128 of the authority node 120. Because the amount of data being processed by the processing nodes 110 can be substantial, the detection processing filter 112 can be used to process requests to determine whether the requesting network device is valid or invalid. Where the detection processing filter 112 determines that short time key is authenticated and the requesting network device is valid, the short time key can include an instruction to direct the processing node 110 to forward advertised discovery packets to each of the remaining processing nodes.

In some embodiments, the processing node manager 118 is configured to advertise all network port information and the application-specific information stored within the network port information database 114 to the remaining processing nodes 110n. In some embodiments, the advertising of the network port information of the selected processing node can be arranged in a discovery packet sent to the other processing nodes 110n. Specifically, in some embodiments the discovery packets can include the short time key received from the authority node manager 128 of the authority node 120 and application-specific information maintained in the processing node 110.

The processing node manager 118 of selected processing node 110 can also receive and examine advertised packets from the other processing nodes 110n. In some embodiments, the advertised packets from the remaining processing nodes 110n can include an authentication code. Where the detection processing filter 112 determines the authentication code is in compliance with the short time key from the authority node 120, the processing node 110 can connect to the remaining processing nodes 110n.

Figure 3 is a block diagram of the distributed network system 300 exemplifying the processing nodes 110n in accordance with embodiments of the disclosure. The distributed network system 300 can include authority node 310, processing node 320, processing node 330, processing node 340, and processing node 350. The authority node 310 selects which processing node will exchange information. Based on the selected processing node, the authority node 310 can generate a variable length passcode, denoted H_{AUTH}. Based on the variable length passcode, H_{AUTH}, the authority node 310 can start exchanging information over secure connections. The variable length passcode, H_{AUTH}, includes a secure passcode and a flag to signal the recipient processing node to start advertising and learning the neighboring node's information.

The processing node 320, processing node 330, processing node 340, and processing node 350 start advertising to each other discover packets. The discover packets contain network ports information of the processing node that sent the discover packets and the variable length passcode, H_{AUTH}, received from the authority node 310. For example, where the authority node 310 selects the processing node 320, the authority node instructs the processing node to advertise its network ports information and the variable length passcode, H_{AUTH}, received from the authority node 310 to the processing node 330, processing node 340, and processing node 350. The exchange in ports information can include, for example, the processing node's port's mac address.

Recipient of the variable length passcode, H_{AUTH}, enables the processing node to authenticate the request coming from the requesting processing node. For example, the processing node 350 can verify the request coming from the processing node 320. Each selected processing node can start to receive advertised packets from other processing nodes.

In some embodiments, the processing node 350 examines each packet which complies to the used discovery protocol. For example, where the receiving processing node determines that the advertised packet contains a variable length passcode, H_{AUTH} that is inconsistent with the variable length passcode, H_{AUTH} it received from the authority node 310, it will consider this an invalid packet. Upon this determination, the processing node will discard the packet. In this way, co-ordinate nodes are provided in a network topology to exchange neighbor information and prevent spoofing packets from disturbing the network topology generation.

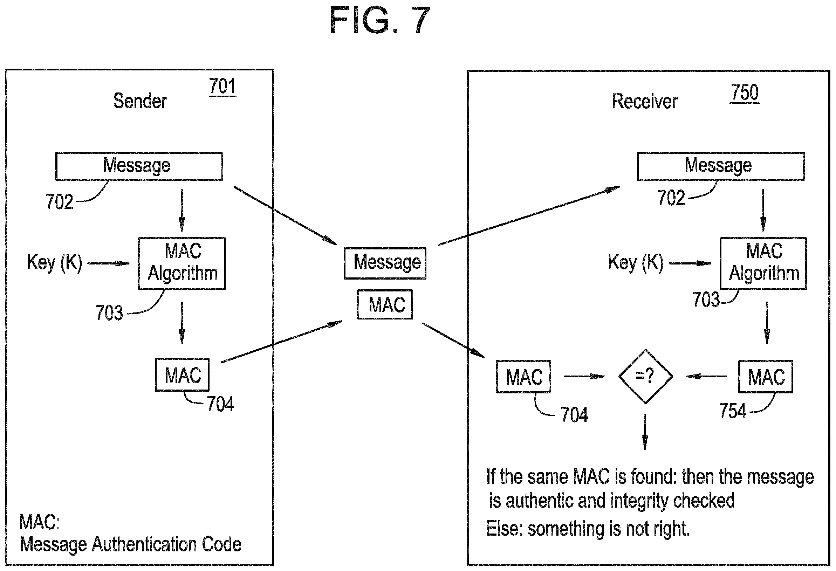

Referring now to Figure 7, an alternative embodiment can be implemented where a 'message authentication code (MAC)' technique is implemented to verify that the authentication code received is in compliance with the received key. In Figure 7, a sender 701 of an authentication code 702 runs it through a MAC algorithm 703 to produce a MAC data tag 704. The authentication code 702 and the MAC tag 704 are then sent to a receiver 750. The receiver 750 in turn runs the authentication code 702 portion of the transmission through the same MAC algorithm 703 using the same key, producing a second MAC data tag 754. The receiver then compares the first MAC tag 704 received in the transmission to the second generated MAC tag 754. If they are identical, the receiver can safely assume that the authentication code was not altered or tampered with during transmission (data integrity).

Alternatively, in some embodiments of the disclosure additional encrypt/decrypt keys to encrypt message & MAC can be employed to verify if the authentication code received is in compliance with the received key. For example, in some embodiments to allow the receiver to be able to detect replay attacks, the authentication code itself can contain data that assures that this same message can only be sent once (e.g. time stamp, sequence number or use of a one-time MAC). In some exemplary embodiments, encryption and decryption can use well-known methods, such as for example, RSA, Tripple DES, AES, etc.

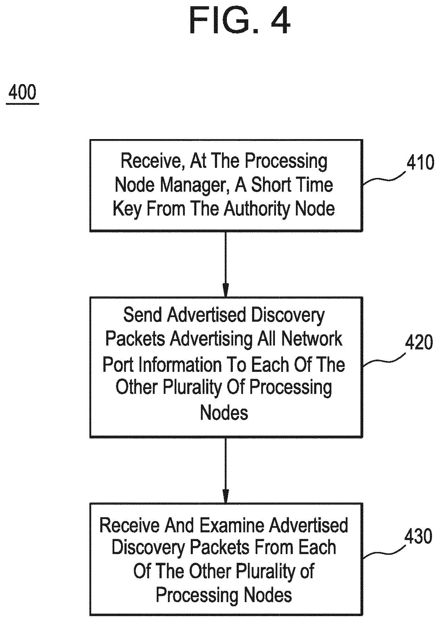

A flow chart for carrying out the method 400 in accordance with the exemplary distributed network system 100 is shown in Figure 4. As detailed above, the processing nodes 110 can communicate with one or more authority nodes 120. The authority nodes 120 can store policy data for each processing node 110 and can distribute the policy data to each processing node 110. The policy data can, for example, define security policies for a protected system, e.g., security policies for the enterprise 200. As an initial matter, the processing node 110 is configured to receive, at the processing node manager 118, a short time key from the authority node 120, wherein the short time key comprises an instruction to forward advertised discovery packets to each of the plurality of processing nodes at step 410. The detection processing filter 112 can be used to process requests to determine whether the requesting network device is valid or invalid. Where the detection processing filter 112 determines that short time key is authenticated and the requesting network device is valid, the short time key can include an instruction to direct the processing node 110 to forward advertised discovery packets to each of the remaining processing nodes.

At step 420, advertised discovery packets advertising all network port information and the application-specific information stored within the network port information database 114 to the remaining processing nodes 110n are sent to each of the other plurality of processing nodes 110n. In some embodiments, the advertising of the network port information of the selected processing node can be arranged in a discovery packet sent to the other processing nodes 110n. Specifically, in some embodiments the discovery packets can include the short time key received from the authority node manager 128 of the authority node 120 and application-specific information maintained in the processing node 110.

At step 430, the processing node manager 118 of selected processing node 110 can also receive and examine advertised packets from the other processing nodes 110n. In some embodiments, the advertised packets from the remaining processing nodes 110n can include an authentication code. Where the detection processing filter 112 determines the authentication code is in compliance with the short time key from the authority node 120, the processing node 110 can connect to the remaining processing nodes 110n.

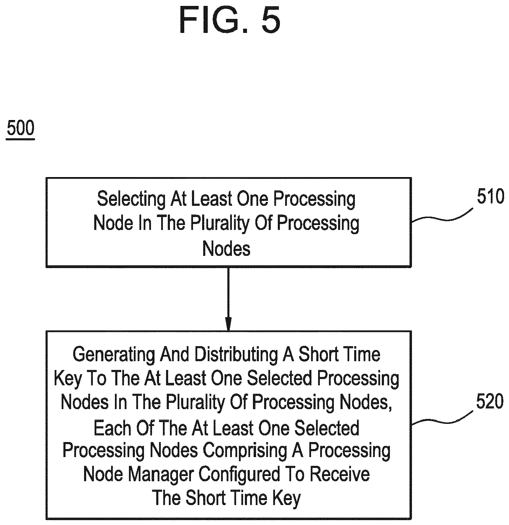

A flow chart for carrying out the method 500 in accordance with the alternative exemplary local area system 200 is shown in Figure 5. As an initial matter, the authority node manager 128 can select at least one processing node 110 from the plurality of processing nodes 110n at step 510. Alternatively, a processing node 110, operating as a control node, can select at least one processing node 110 from the plurality of processing nodes 110n at step 510.

At step 520, the authority node manager 128 is configured to generate and distribute a security policy to a selected processing node 110. In some embodiments, the security policy can include a short time key that can include an instruction to direct the selected processing node 110 to forward advertised discovery packets to each of the remaining processing nodes 110n.

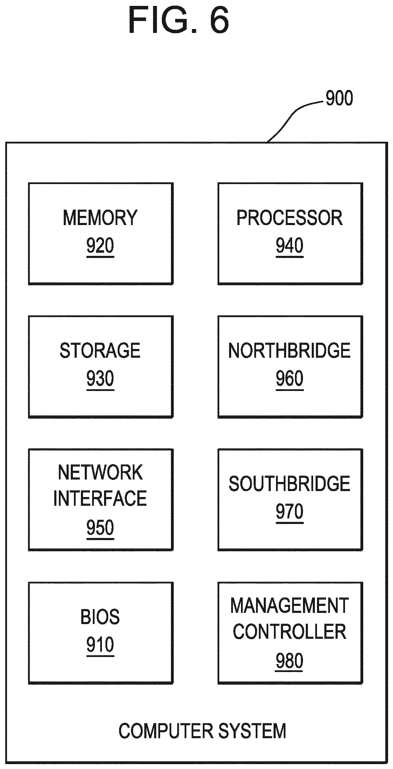

Figure 6 illustrates a block diagram of an example computer system 900. The computer system 900 can include a processor 940, a network interface 950, a management controller 980, a memory 920, a storage 930, a Basic Input/Output System (BIOS) 910, and a northbridge 960, and a southbridge 970.

The computer system 900 can be, for example, a server (e.g., one of many rack servers in a data center) or a personal computer. The processor (e.g., central processing unit (CPU)) 940 can be a chip on a motherboard that can retrieve and execute programming instructions stored in the memory 920. The processor 940 can be a single CPU with a single processing core, a single CPU with multiple processing cores, or multiple CPUs. One or more buses (not shown) can transmit instructions and application data between various computer components such as the processor 940, memory 920, storage 930, and networking interface 950.

The memory 920 can include any physical device used to temporarily or permanently store data or programs, such as various forms of random-access memory (RAM). The storage 930 can include any physical device for non-volatile data storage such as a HDD or a flash drive. The storage 930 can have a greater capacity than the memory 920 and can be more economical per unit of storage, but can also have slower transfer rates.

The BIOS 910 can include a Basic Input/Output System or its successors or equivalents, such as an Extensible Firmware Interface (EFI) or Unified Extensible Firmware Interface (UEFI). The BIOS 910 can include a BIOS chip located on a motherboard of the computer system 900 storing a BIOS software program. The BIOS 910 can store firmware executed when the computer system is first powered on along with a set of configurations specified for the BIOS 910. The BIOS firmware and BIOS configurations can be stored in a non-volatile memory (e.g., NVRAM) 920 or a ROM such as flash memory. Flash memory is a non-volatile computer storage medium that can be electronically erased and reprogrammed.

The BIOS 910 can be loaded and executed as a sequence program each time the computer system 900 is started. The BIOS 910 can recognize, initialize, and test hardware present in a given computing system based on the set of configurations. The BIOS 910 can perform self-test, such as a Power-on-Self-Test (POST), on the computer system 900. This self-test can test functionality of various hardware components such as hard disk drives, optical reading devices, cooling devices, memory modules, expansion cards and the like. The BIOS can address and allocate an area in the memory 920 in to store an operating system. The BIOS 910 can then give control of the computer system to the OS.

The BIOS 910 of the computer system 900 can include a BIOS configuration that defines how the BIOS 910 controls various hardware components in the computer system 900. The BIOS configuration can determine the order in which the various hardware components in the computer system 900 are started. The BIOS 910 can provide an interface (e.g., BIOS setup utility) that allows a variety of different parameters to be set, which can be different from parameters in a BIOS default configuration. For example, a user (e.g., an administrator) can use the BIOS 910 to specify clock and bus speeds, specify what peripherals are attached to the computer system, specify monitoring of health (e.g., fan speeds and CPU temperature limits), and specify a variety of other parameters that affect overall performance and power usage of the computer system.

The management controller 980 can be a specialized microcontroller embedded on the motherboard of the computer system. For example, the management controller 980 can be a BMC or a RMC. The management controller 980 can manage the interface between system management software and platform hardware. Different types of sensors built into the computer system can report to the management controller 980 on parameters such as temperature, cooling fan speeds, power status, operating system status, etc. The management controller 980 can monitor the sensors and have the ability to send alerts to an administrator via the network interface 950 if any of the parameters do not stay within preset limits, indicating a potential failure of the system. The administrator can also remotely communicate with the management controller 980 to take some corrective action such as resetting or power cycling the system to restore functionality.

The northbridge 960 can be a chip on the motherboard that can be directly connected to the processor 940 or can be integrated into the processor 940. In some instances, the northbridge 960 and the southbridge 970 can be combined into a single die. The northbridge 960 and the southbridge 970, manage communications between the processor 940 and other parts of the motherboard. The northbridge 960 can manage tasks that require higher performance than the southbridge 970. The northbridge 960 can manage communications between the processor 940, the memory 920, and video controllers (not shown). In some instances, the northbridge 960 can include a video controller.

The southbridge 970 can be a chip on the motherboard connected to the northbridge 960, but unlike the northbridge 960, is not directly connected to the processor 940. The southbridge 970 can manage input/output functions (e.g., audio functions, BIOS, Universal Serial Bus (USB), Serial Advanced Technology Attachment (SATA), Peripheral Component Interconnect (PCI) bus, PCI eXtended (PCI-X) bus, PCI Express bus, Industry Standard Architecture (ISA) bus, Serial Peripheral Interface (SPI) bus, Enhanced Serial Peripheral Interface (eSPI) bus, System Management Bus (SMBus), etc.) of the computer system 900. The southbridge 970 can be connected to or can include within the southbridge 970 the management controller 970, Direct Memory Access (DMAs) controllers, Programmable Interrupt Controllers (PICs), and a real-time clock.

The various illustrative logical blocks, modules, and circuits described in connection with the disclosure herein can be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the disclosure herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

In one or more exemplary designs, the functions described can be implemented in hardware, software, firmware, or any combination thereof. If implemented in software, the functions can be stored on or transmitted over as one or more instructions or code on a non-transitory computer-readable medium. Non-transitory computer-readable media includes both computer storage media and communication media including any medium that facilitates transfer of a computer program from one place to another. A storage media can be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Disk and disc, as used herein, includes compact disc (CD), laser disc, optical disc, digital versatile disc (DVD), floppy disk and blue ray disc where disks usually reproduce data magnetically, while discs reproduce data optically with lasers. Combinations of the above should also be included within the scope of non-transitory computer-readable media.

While various embodiments of the present invention have been described above, it should be understood that they have been presented by way of example only, and not limitation. Numerous changes to the disclosed embodiments can be made in accordance with the disclosure herein. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A network system (100), comprising:
a plurality of processing nodes (110), wherein each of the processing nodes comprises a processing node manager (118) configured to perform operations which are characterized to comprise:
receiving a packet from an authority node (120) or a control node via a secured connection, wherein the packet comprises a variable length passcode and/or a short time key, and an instruction to forward advertised discovery packets to each of the plurality of processing nodes (410);
sending advertised discovery packets advertising network port information to each of the other plurality of processing nodes (420); and
receiving and examining advertised discovery packets from each of the other plurality of processing nodes (430), the advertised discovery packets from each of the other plurality of processing nodes (430) comprising an authentication code, wherein the operation of examining the advertised discovery packets comprises determining whether the authentication code is compliant with the received packet,
wherein the determining whether the authentication code is compliant involves running the received advertised packets through a message authentication code, MAC, algorithm to produce a MAC data tag,
the MAC data tag being compared against the received authentication code, and
the determining whether the authentication code is compliant being deemed successful when the MAC data tag matches the received authentication code.

2. The network system (100) of the previous claim, wherein
the advertised discovery packets comprises the packet and application-specific information maintained in the processing node (110).

3. The network system (100) of the previous claim, wherein the control node is configured to:
select at least one processing node in the plurality of processing nodes (510); and
generate and distribute a packet to the at least one selected processing node in the plurality of processing nodes (520), wherein the packet comprises an instruction to the at least one selected processing node to forward advertised discovery packets to each of the plurality of processing nodes (110); and/or wherein
the control node is selected from the plurality of processing nodes by an authority node (120).

4. A computer-implemented method for providing data security to network elements, which are characterized to comprise:
receiving a packet from an authority node (120) or a control node via a secured connection, wherein the packet comprises a variable length passcode and/or a short time key, and an instruction to forward advertised discovery packets to each of a plurality of processing nodes (410);
sending advertised discovery packets advertising network port information to each of the other plurality of processing nodes (420); and
receiving and examining advertised discovery packets from each of the other plurality of processing nodes (430), the advertised discovery packets from each of the other plurality of processing nodes (430) comprising an authentication code, wherein the operation of examining the advertised discovery packets comprises determining whether the authentication code is compliant with the received packet,
wherein the determining whether the authentication code is compliant involves running the received advertised packets through a message authentication code, MAC, algorithm to produce a MAC data tag,
the MAC data tag being compared against the received authentication code, and
the determining whether the authentication code is compliant being deemed successful when the MAC data tag matches the received authentication code.

5. The computer-implemented method of the previous claim, wherein
the advertised discovery packets comprises the packet and application-specific information maintained in the processing node (110).

6. The computer-implemented method of the previous method claims, wherein the control node is configured to:
select at least one processing node in the plurality of processing nodes (510); and
generate and distribute a packet to the at least one selected processing node in the plurality of processing nodes (520), wherein the packet comprises an instruction to the at least one selected processing node to forward advertised discovery packets to each of the plurality of processing nodes (110).

7. The computer-implemented method of the previous method claim, wherein the control node is selected from the plurality of processing nodes (110) by an authority node (120).

8. A computing device, comprising:
a memory containing a machine readable medium comprising machine executable code having stored thereon instructions for performing a method for providing data security to network elements;
a processor coupled to the memory, the processor configured to be characterized to execute the machine executable code to cause the processor to:
receive a packet from an authority node (120) or a control node via a secured connection, wherein the packet comprises a variable length passcode and/or a short time key, and an instruction to forward advertised discovery packets to each of a plurality of processing nodes (410);
send advertised discovery packets advertising network port information to each of the other plurality of processing nodes (420); and
receive and examine advertised discovery packets from each of the other plurality of processing nodes (430), the advertised discovery packets from each of the other plurality of processing nodes (430), comprising an authentication code, wherein the operation of examining the advertised discovery packets comprises verifying determining whether the authentication code is compliant with the received packet,
wherein the determining whether the authentication code is compliant involves running the received advertised packets through a message authentication code, MAC, algorithm to produce a MAC data tag,
the MAC data tag being compared against the received authentication code, and
the determining whether the authentication code is compliant being deemed successful when the MAC data tag matches the received authentication code.

9. The computing device of the previous device claim, wherein
the advertised discovery packets comprise the packet and application-specific information maintained in each of the plurality of processing nodes (110).

10. The computing device of the previous device claim 8, wherein the control node is configured to:
select at least one processing node in the plurality of processing nodes (510); and
generate and distribute a packet to the at least one selected processing nodes in the plurality of processing nodes (520), wherein the packet comprises an instruction to the at least one selected processing nodes to forward advertised discovery packets to each of the plurality of processing nodes (110).

11. The computing device of the previous device claims, wherein the control node is selected from the plurality of processing nodes (110) by an authority node (120).

## Patentansprüche

1. Netzwerksystem (100) mit:
mehreren Verarbeitungsknoten (110), wobei jeder der Verarbeitungsknoten eine Verarbeitungsknotenmanagementeinrichtung (118) aufweist, die dafür konfiguriert ist, Verarbeitungen auszuführen, die durch die folgenden Schritte gekennzeichnet sind:
Empfangen eines Pakets von einem Authority-Knoten (120) oder von einem Steuerknoten über eine gesicherte Verbindung, wobei das Paket einen Zugangscode variabler Länge und/oder einen Kurzzeitschlüssel und eine Anweisung zum Weiterleiten angekündigter Discovery-Pakete an jeden der mehreren Verarbeitungsknoten (410) aufweist;
Übertragen von angekündigten Discovery-Paketen, die Netzwerkportinformation ankündigen, an jeden der anderen Vielzahl von Verarbeitungsknoten (420); und
Empfangen und Untersuchen von angekündigten Discovery-Paketen von jedem der anderen Vielzahl von Verarbeitungsknoten (430), wobei die angekündigten Discovery-Pakete von jedem der anderen Vielzahl von Verarbeitungsknoten (430) einen Authentifizierungscode enthalten, wobei der Vorgang zum Untersuchen der angekündigten Discovery-Pakete das Bestimmen aufweist, ob der Authentifizierungscode mit dem empfangenen Paket kompatibel ist,
wobei das Bestimmen, ob der Authentifizierungscode kompatibel ist, das Anwenden eines Nachrichtenauthentifizierungscode-, MAC, Algorithmus auf die empfangenen angekündigten Pakete zum Erzeugen eines MAC-Daten-Tags aufweist,
wobei das MAC-Daten-Tag mit dem empfangenen Authentifizierungscode verglichen wird, und
wobei das Bestimmen, ob der Authentifizierungscode kompatibel ist, als erfolgreich betrachtet wird, wenn das MAC-Daten-Tag mit dem empfangenen Authentifizierungscode übereinstimmt.

2. Netzwerksystem (100) nach Anspruch 1, wobei die angekündigten Discovery-Pakete die paket- und anwendungsspezifische Information enthalten, die im Verarbeitungsknoten (110) gespeichert ist.

3. Netzwerksystem (100) nach Anspruch 2, wobei der Steuerknoten dafür konfiguriert ist:
mindestens einen Verarbeitungsknoten aus der Vielzahl von Verarbeitungsknoten (510) auszuwählen; und
ein Paket zu erzeugen und an den mindestens einen ausgewählten Verarbeitungsknoten der Vielzahl von Verarbeitungsknoten (520) zu verteilen, wobei das Paket eine Anweisung für den mindestens einen ausgewählten Verarbeitungsknoten enthält, angekündigte Discovery-Pakete an jeden der Vielzahl von Verarbeitungsknoten (110) weiterzuleiten, und/oder
wobei der Steuerknoten durch einen Authority-Knoten (120) aus der Vielzahl von Verarbeitungsknoten ausgewählt wird.

4. Computerimplementiertes Verfahren zum Bereitstellen von Datensicherheit für Netzwerkelemente, **gekennzeichnet durch** die Schritte:
Empfangen eines Pakets von einem Authority-Knoten (120) oder von einem Steuerknoten über eine gesicherte Verbindung, wobei das Paket einen Zugangscode variabler Länge und/oder einen Kurzzeitschlüssel und eine Anweisung zum Weiterleiten von angekündigten Discovery-Paketen an jeden einer Vielzahl von Verarbeitungsknoten (410) aufweist;
Übertragen von angekündigten Discovery-Paketen, die Netzwerkportinformation ankündigen, an jeden der anderen Vielzahl von Verarbeitungsknoten (420); und
Empfangen und Untersuchen von angekündigten Discovery-Paketen von jedem der anderen Vielzahl von Verarbeitungsknoten (430), wobei die angekündigten Discovery-Pakete von jedem der anderen Vielzahl von Verarbeitungsknoten (430) einen Authentifizierungscode enthalten, wobei der Vorgang zum Untersuchen der angekündigten Discovery-Pakete das Bestimmen aufweist, ob der Authentifizierungscode mit dem empfangenen Paket kompatibel ist,
wobei das Bestimmen, ob der Authentifizierungscode kompatibel ist, das Anwenden eines Nachrichtenauthentifizierungscode-, MAC, Algorithmus auf die empfangenen angekündigten Discovery-Pakete zum Erzeugen eines MAC-Daten-Tags aufweist,
wobei das MAC-Daten-Tag mit dem empfangenen Authentifizierungscode verglichen wird, und
das Bestimmen, ob der Authentifizierungscode kompatibel ist, als erfolgreich betrachtet wird, wenn das MAC-Daten-Tag mit dem empfangenen Authentifizierungscode übereinstimmt.

5. Computerimplementiertes Verfahren nach Anspruch 4, wobei die angekündigten Discovery-Pakete die paket- und anwendungsspezifische Information enthalten, die im Verarbeitungsknoten (110) gespeichert ist.

6. Computerimplementiertes Verfahren nach den vorhergehenden Verfahrensansprüchen, wobei der Steuerknoten dafür konfiguriert ist:
mindestens einen Verarbeitungsknoten aus der Vielzahl von Verarbeitungsknoten (510) auszuwählen; und
ein Paket zu erzeugen und an den mindestens einen ausgewählten Verarbeitungsknoten der Vielzahl von Verarbeitungsknoten (520) zu verteilen, wobei das Paket eine Anweisung für den mindestens einen ausgewählten Verarbeitungsknoten aufweist, angekündigte Discovery-Pakete an jeden der Vielzahl von Verarbeitungsknoten (110) weiterzuleiten.

7. Computerimplementiertes Verfahren nach dem vorhergehenden Verfahrensanspruch, wobei der Steuerknoten durch einen Authority-Knoten (120) aus der Vielzahl von Verarbeitungsknoten (110) ausgewählt wird.

8. Computergerät mit:
einem Speicher, der ein maschinenlesbares Medium mit einem maschinenausführbaren Code enthält, in dem Anweisungen zum Ausführen eines Verfahrens zum Bereitstellen von Datensicherheit für Netzwerkelemente gespeichert sind;
einem mit dem Speicher verbundenen Prozessor, wobei der Prozessor dafür konfiguriert ist, den maschinenausführbaren Code auszuführen, um den Prozessor zu veranlassen:
ein Paket von einem Authority-Knoten (120) oder von einem Steuerknoten über eine gesicherte Verbindung zu empfangen, wobei das Paket einen Zugangscode variabler Länge und/oder einen Kurzzeitschlüssel und eine Anweisung zum Weiterleiten von angekündigten Discovery-Paketen an jeden von mehreren Verarbeitungsknoten (410) aufweist;
angekündigte Discovery-Pakete, die Netzwerkportinformation ankündigen, an jeden der anderen Vielzahl von Verarbeitungsknoten (420) zu übertragen; und
angekündigte Discovery-Pakete von jedem der anderen Vielzahl von Verarbeitungsknoten (430) zu empfangen, wobei die angekündigten Discovery-Pakete von jedem der anderen Vielzahl von Verarbeitungsknoten (430) einen Authentifizierungscode enthalten, wobei der Vorgang zum Untersuchen der angekündigten Discovery-Pakete das Bestimmen aufweist, ob der Authentifizierungscode mit dem empfangenen Paket kompatibel ist,
wobei das Bestimmen, ob der Authentifizierungscode kompatibel ist, das Anwenden eines Nachrichtenauthentifizierungscode-, MAC, Algorithmus auf die empfangenen angekündigten Discovery-Pakete aufweist, um ein MAC-Daten-Tag zu erzeugen,
das MAC-Daten-Tag mit dem empfangenen Authentifizierungscode verglichen wird, und
das Bestimmen, ob der Authentifizierungscode kompatibel ist, als erfolgreich betrachtet wird, wenn das MAC-Daten-Tag mit dem empfangenen Authentifizierungscode übereinstimmt.

9. Computergerät nach Anspruch 8, wobei die angekündigten Discovery-Pakete die paket- und anwendungsspezifische Information enthalten, die in jedem der mehreren Verarbeitungsknoten (110) gespeichert ist.

10. Computergerät nach Anspruch 8, wobei der Steuerknoten dafür konfiguriert ist:
mindestens einen Verarbeitungsknoten aus der Vielzahl von Verarbeitungsknoten (510) auszuwählen; und
ein Paket zu erzeugen und an den mindestens einen ausgewählten Verarbeitungsknoten der Vielzahl von Verarbeitungsknoten (520) zu verteilen, wobei das Paket eine Anweisung für den mindestens einen ausgewählten Verarbeitungsknoten aufweist, angekündigte Discovery-Pakete an jeden der Vielzahl von Verarbeitungsknoten (110) weiterzuleiten.

11. Computergerät nach einem der Ansprüche 8 bis 10, wobei der Steuerknoten durch einen Authority-Knoten (120) aus der Vielzahl von Verarbeitungsknoten (110) ausgewählt wird.

## Revendications

1. Système de réseau (100) comprenant :
une pluralité de nœuds de traitement (110), chacun des nœuds de traitement comprenant un gestionnaire de nœud de traitement (118) configuré pour exécuter des opérations qui sont caractérisées comme comprenant :
la réception d'un paquet à partir d'un nœud d'autorité (120) ou d'un nœud de commande par le biais d'une connexion sécurisée, le paquet comprenant un mot de passe de longueur variable et/ou une touche de courte durée, et une instruction pour transmettre des paquets de découverte annoncés vers chacun des nœuds de la pluralité de nœuds de traitement (410) ;
l'envoi d'une information de port de réseau annonçant des paquets de découverte annoncés à chacun des nœuds de l'autre pluralité de nœuds de traitement (420) ; et
la réception et l'examen de paquets de découverte annoncés à partir de chacun des nœuds de l'autre pluralité nœuds de traitement (430), les paquets de découverte annoncés provenant de chacun des nœuds de l'autre pluralité de nœuds de traitement (430) comprenant un code d'authentification, où l'opération d'examen des paquets de découverte annoncés comprend la détermination que le code d'authentification est en accord avec le paquet reçu,
où la détermination que le code d'authentification est en accord implique la soumission des paquets de découverte annoncés reçus à un algorithme de code d'authentification de message, MAC, pour élaborer une étiquette de donnée MAC,
l'étiquette de donnée MAC étant comparée au code d'authentification reçu, et
la détermination que le code d'authentification est en accord étant considéré comme étant réussie lorsque l'étiquette de donnée MAC correspond avec le code d'authentification reçu.

2. Système de réseau (100) selon la revendication précédente, dans lequel les paquets de découverte annoncés comprennent le paquet et une information spécifique à une application conservée dans le nœud de traitement (110).

3. Système de réseau (100) selon la revendication précédente, dans lequel le nœud de commande est configuré pour :
choisir au moins un nœud de traitement dans la pluralité des nœuds de traitement (510) ; et
générer et distribuer un paquet à l'au moins un nœud de traitement choisi dans la pluralité des nœuds de traitement (520), où le paquet comprend une instruction pour que l'au moins un nœud de traitement choisi transmette des paquets de découverte annoncés à chacun des nœuds de la pluralité des nœuds de traitement (110) ; et/ou où
le nœud de commande est choisi à partir de la pluralité des nœuds de traitement par un nœud d'autorité (120).

4. Procédé mis en œuvre par ordinateur permettant de procurer une sécurité de données à des éléments de réseau, qui sont caractérisés comme comprenant :
la réception d'un paquet à partir d'un nœud d'autorité (120) ou d'un nœud de commande par le biais d'une connexion sécurisée, où le paquet comprend un mot de passe de longueur variable et/ou une touche de courte durée, et une instruction pour transmettre des paquets de découverte annoncés vers chacun des nœuds de la pluralité de nœuds de traitement (410) ;
l'envoi d'une information de port de réseau annonçant des paquets de découverte annoncés à chacun des nœuds de l'autre pluralité nœuds de traitement (420) ; et
la réception et l'examen de paquets de découverte annoncés à partir de chacun des nœuds de l'autre pluralité nœuds de traitement (430), les paquets de découverte annoncés provenant de chacun des nœuds de l'autre pluralité des nœuds de traitement (430) comprenant un code d'authentification, où l'opération d'examen des paquets de découverte annoncés comprend la détermination que le code d'authentification est en accord avec le paquet reçu,
où la détermination que le code d'authentification est en accord implique la soumission des paquets de découverte annoncés reçus à un algorithme de code d'authentification de message, MAC, pour élaborer une étiquette de donnée MAC,
l'étiquette de donnée MAC étant comparée au code d'authentification reçu, et
la détermination que le code d'authentification est en accord étant considéré comme étant réussie lorsque l'étiquette de donnée MAC correspond avec le code d'authentification reçu.

5. Procédé mis en œuvre par ordinateur selon la revendication précédente, dans lequel les paquets de découverte annoncés comprennent le paquet et une information spécifique à une application conservée dans le nœud de traitement (110).

6. Procédé mis en œuvre par ordinateur selon les revendications de procédé précédentes, dans lequel le nœud de commande est configuré pour :
choisir au moins un nœud de traitement dans la pluralité de nœuds de traitement (510); et
générer et distribuer un paquet à l'au moins un nœud de traitement choisi dans la pluralité des nœuds de traitement (520), où le paquet comprend une instruction pour que l'au moins un nœud de traitement transmette des paquets de découverte annoncés à chacun des nœuds de la pluralité de nœuds de traitement (110).

7. Procédé mis en œuvre par ordinateur selon les revendications de procédé précédentes, dans lequel le nœud de commande est choisi parmi les nœuds de la pluralité de nœuds de traitement (110) par un nœud d'autorité (120).

8. Dispositif informatique comprenant :
une mémoire contenant un support lisible par machine comprenant un code exécutable par machine ayant des instructions y étant stockées permettant d'exécuter un procédé pour procurer une sécurité de données à des éléments de réseau ;
un processeur couplé à la mémoire, le processeur étant configuré pour être caractérisé pour exécuter le code exécutable par machine afin qu'il fasse en sorte que le processeur :
reçoive un paquet à partir d'un nœud d'autorité (120) ou d'un nœud de commande par le biais d'une connexion sécurisée, où le paquet comprend un mot de passe de longueur variable et/ou une touche de courte durée, et une instruction pour transmettre des paquets de découverte annoncés vers chacun des nœuds d'une pluralité de nœuds de traitement (410) ;
envoie une information de port de réseau annonçant des paquets de découverte annoncés à chacun des nœuds de l'autre pluralité des nœuds de traitement (420) ; et
reçoive et examine des paquets de découverte annoncés à partir de chacun des nœuds de l'autre pluralité de nœuds de traitement (430), les paquets de découverte annoncés provenant de chacun des nœuds de l'autre pluralité des nœuds de traitement (430) comprenant un code d'authentification, où l'opération d'examen des paquets de découverte annoncés comprend la détermination que le code d'authentification est en accord avec le paquet reçu,
où la détermination que le code d'authentification est en accord implique la soumission des paquets de découverte annoncés reçus à un algorithme de code d'authentification de message, MAC, pour élaborer une étiquette de donnée MAC,
l'étiquette de donnée MAC étant comparée au code d'authentification reçu, et
la détermination que le code d'authentification est en accord étant considéré comme étant réussie lorsque l'étiquette de donnée MAC correspond avec le code d'authentification reçu.

9. Dispositif informatique selon la revendication de dispositif précédente, dans lequel les paquets de découverte annoncés comprennent le paquet et une information spécifique à une application conservée dans chacun des nœuds de la pluralité de nœuds de traitement (110).

10. Dispositif informatique selon la revendication de dispositif 8, dans lequel le nœud de commande est configuré pour :
choisir au moins un nœud de traitement dans la pluralité des nœuds de traitement (510) ; et générer et distribuer un paquet à l'au moins un nœud de traitement choisi dans la pluralité des nœuds de traitement (520), où le paquet comprend une instruction pour que l'au moins un nœud de traitement transmette des paquets de découverte annoncés à chacun des nœuds de la pluralité de nœuds de traitement (110).

11. Dispositif informatique selon les revendications de dispositif précédentes, dans lequel le nœud de commande est choisi dans la pluralité des nœuds de traitement (110) par un nœud d'autorité (120).
